# EUROPEAN PATENT APPLICATION

(11) **EP 4 729 370 A1**
(43) Date of publication of application: **22.04.2026**
(21) Application number: 24207560.4
(22) Date of filing: 18.10.2024
(51) Int. Cl.: B60R 25/24, G07C 9/00, G07C 9/27

(54) **A DEVICE, A KEY CARD AND A METHOD FOR DELETING A SHARED DIGITAL KEY FROM A KEY CARD**

(71) Applicant: Bayerische Motoren Werke Aktiengesellschaft, 80809 München (DE)
(72) Inventor: Fink, Matthias, 81541 München (DE); Hippler, Marco, 81541 München (DE)

(57) **Abstract**

The present document describes a device (110) for interacting with a shared digital key (161) for controlling one or more vehicle functions (103) of a vehicle (100), wherein the shared digital key (161) is stored on a key card (160). The device (110) is configured to cause termination of a digital key endpoint for the shared digital key (161) on the key card (160); to receive a termination attestation from the key card (160), wherein the termination attestation indicates that the digital key endpoint has been terminated; to cause deletion of the shared digital key (161) from a key tracking server for tracking keys; and subject to causing deletion of the shared digital key (161) on the key tracking server, to cause deletion of the digital key endpoint from a memory slot of a storage area (166) of the key card (160).

## Description

The present document is directed at controlling functions of a vehicle using multiple digital key entities. In particular, the present document is directed at sharing a digital key for controlling a vehicle function with a key card.

A vehicle may comprise a communication unit which allows a user to control one or more functions of the vehicle using a portable device, such as a smartphone or a smart watch. Example functions which may be controlled using the portable device are unlocking and/or locking of a door of the vehicle and/or starting the engine of the vehicle. The portable device typically comprises a digital key for authentication of the portal device at the vehicle. Such a portable device may be referred to as a digital key device. The digital key may be a CCC (Car Connectivity Consortium) digital key.

A user of a digital key device may share the digital key for controlling the one or more vehicle functions with another device which then itself becomes a digital key device. The present document is directed at the technical problem of providing a safe, flexible and/or efficient key sharing procedure for sharing a digital key with another digital key entity, notably with a key card.

The technical problem is solved by each one or the independent claims. Preferred examples are specified in the dependent claims.

According to an aspect a device, e.g. a sharer device, for managing a digital key which is enabled for controlling one or more vehicle functions of a vehicle is described. The device is configured to set up a communication channel with a key card, and to interact with the key card regarding a shared digital key of the key card via the communication channel, wherein the shared digital key is typically derived from the digital key of the device.

According to a further aspect a key card configured to control one or more vehicle functions of a vehicle using a shared digital key which is derived from a digital key of a device is described. The key card is configured to set up a communication channel with the device, and to interact with the device regarding the shared digital key of the key card, which is stored on the key card, via the communication channel.

According to another aspect, a method for managing a shared digital key on a key card is described, wherein the shared digital key is enabled for controlling one or more vehicle functions of a vehicle, and wherein the shared digital key is derived from a digital key of a device. The method comprises setting up a communication channel between the device and the key card, and interacting with regards to the shared digital key of the key card via the communication channel.

According to an aspect, a device for interacting with a digital key which is enabled for controlling one or more vehicle functions of a vehicle is described, wherein the digital key is stored on a digital key entity. The device is configured to set up a communication channel with the digital key entity, to request routing information regarding the vehicle server that is associated with the digital key on the digital key entity via the communication channel, to receive the requested routing information via the communication channel, and to use the routing information for interacting with the vehicle server regarding the digital key.

According to another aspect, a digital key entity configured to store a digital key (which is enabled) for controlling one or more vehicle functions of a vehicle is described. The digital key entity is configured to set up a communication channel with a device, to receive a request for routing information regarding the vehicle server that is associated with the digital key via the communication channel, and to send the requested routing information via the communication channel.

According to another aspect, a digital key certificate for a digital key is described, which is enabled for controlling one or more vehicle functions of a vehicle. The digital key certificate comprises routing information regarding the vehicle server that is associated with the digital key.

According to another aspect, a method for interacting with a digital key which is enabled for controlling one or more vehicle functions of a vehicle is described, wherein the digital key is stored on a digital key entity. The method comprises setting up a communication channel with the digital key entity; requesting routing information regarding the vehicle server that is associated with the digital key on the digital key entity via the communication channel; receiving the requested routing information via the communication channel; and using the routing information for interacting with the vehicle server regarding the digital key.

According to a further aspect, a method for interacting with a digital key which is enabled for controlling one or more vehicle functions of a vehicle is described, wherein the digital key is stored on a digital key entity (such as a key card). The method comprises setting up a communication channel with a device; receiving a request for routing information regarding the vehicle server that is associated with the digital key via the communication channel; and sending the requested routing information via the communication channel.

According to an aspect, a device for interacting with a shared digital key which is enabled for controlling one or more vehicle functions of a vehicle is described, wherein the shared digital key is stored on a key card. The device is configured to cause termination of a digital key endpoint for the shared digital key on the key card, to receive a termination attestation from the key card, wherein the termination attestation indicates that the digital key endpoint has been terminated, to cause deletion of the shared digital key from a key tracking server for tracking keys, and subject to causing deletion of the shared digital key on the key tracking server, to cause deletion of the digital key endpoint from a memory slot of the storage area of the key card.

According to another aspect, a key card configured to store a shared digital key which is enabled for controlling one or more vehicle functions of a vehicle is described. The key card is configured to receive a request for terminating the digital key endpoint for the shared digital key on the key card, to send a termination attestation which indicates that the digital key endpoint has been terminated, to receive a request for deletion of the digital key endpoint from a memory slot of the storage area of the key card, wherein the request comprises a deletion confirmation indicative of the deletion of the shared digital key from a key tracking server, to verify the deletion confirmation, and to delete the digital key endpoint in dependence of the verification of the deletion confirmation.

According to a further aspect, a method for interacting with a shared digital key which is enabled for controlling one or more vehicle functions of a vehicle is described, wherein the shared digital key is stored on a key card. The method comprises causing termination of a digital key endpoint for the shared digital key on the key card, receiving a termination attestation from the key card, wherein the termination attestation indicates that the digital key endpoint has been terminated, causing deletion of the shared digital key from a key tracking server for tracking keys, and subject to causing deletion of the shared digital key on the key tracking server, causing deletion of the digital key endpoint from a memory slot of a storage area of the key card.

According to another aspect, a method for deleting a shared digital key which is enabled for controlling one or more vehicle functions of a vehicle is described.

The method comprises receiving a request for terminating the digital key endpoint for the shared digital key on the key card, sending a termination attestation which indicates that the digital key endpoint has been terminated, receiving a request for deletion of the digital key endpoint from a memory slot of the storage area of the key card, wherein the request comprises a deletion confirmation indicative of the deletion of the shared digital key from a key tracking server, verifying the deletion confirmation, and deleting the digital key endpoint in dependence of the verification of the deletion confirmation.

According to a further aspect, a software program is described. The software program may be adapted for execution on a processor and for performing the method steps of the one or more methods outlined in the present document when carried out on the processor.

According to another aspect, a storage medium is described. The storage medium may comprise a software program adapted for execution on a processor and for performing the method steps of the one or more method steps outlined in the present document when carried out on the processor.

According to a further aspect, a computer program product is described. The computer program may comprise executable instructions for performing the method steps of the one or more methods outlined in the present document when executed on a computer.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Furthermore, it is noted that brackets are used within the present document to indicate optional features.

The invention is explained below in an exemplary manner with reference to the accompanying drawings, wherein
Fig. 1a shows an example system for controlling a vehicle function using a digital key device;
Fig. 1b shows an example digital key device, notably an owner device and/or a sharer device;
Fig. 1c shows an example key card;
Fig. 2 illustrates an example scenario for sharing a digital key with a key card;
Fig. 3 shows an example process for sharing a digital key with a key card;
Fig. 4 shows an example process for terminating and/or deleting a shared digital key on a key card;
Fig. 5 shows a flow chart of an example method for interacting with a digital key that is stored on a key card;
Figs. 6a and 6b each show a flow chart of an example method for providing routing information to the vehicle server of a digital key; and
Figs. 7a and 7b each show a flow chart of an example method for deleting a digital key from a key card.

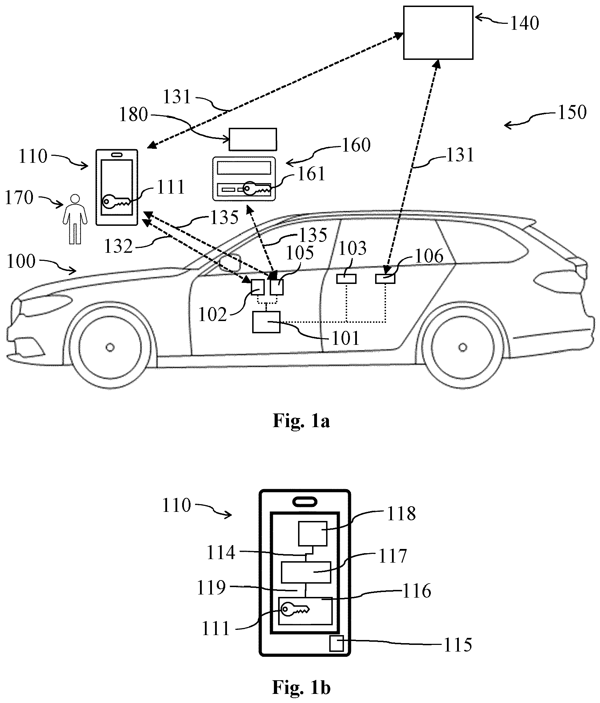

As outlined above, the present document is directed at the technical problem of handling a digital key for controlling one or more functions of a vehicle in a reliable, flexible and/or safe manner. In this context, Fig. 1a shows an example system 150 which comprises a vehicle 100 and at least one digital key device 110. The digital key device 110 may be a portable electronic device, such as a smartphone, a tablet PC, a wearable smart device (such as a smart watch), etc., wherein a digital key 111 is stored on the portable electronic device, notably on a protected memory section (e.g., the secure element) of the portable electronic device. The device 110 typically comprises an integrated power supply, such as a battery, in order to allow the device 110 to be operated in an autonomous manner.

The digital key device 110 may communicate with a communication unit 102, 105 of the vehicle 100 via one or more different wireless communication links 132, 135. Different communication links 132, 135 may be used for different purposes.

In particular, a Bluetooth Low Energy (BLE) communication link 132 may be used to
- determine the distance and/or the relative position between the digital key device 110 and the vehicle 100 (notably based on the signal strength, in particular the RSSI (Received Signal Strength Indicator), of the radio signals which are exchanged between the vehicle 100 and the device 110, and/or based on a channel sounding technique); and/or
- exchange data between the digital key device 110 (e.g., a control command for controlling a vehicle function, such as unlocking a door and/or opening or closing a window and/or activating or deactivating a heating function).

Alternatively, or in addition, a Ultrawideband (UWB) communication link may be used to determine the location of the device 110 relative to the vehicle 100 in a relatively precise manner. The determination of the location of the device 110 using the UWB communication link may be referred to as UWB ranging.

Alternatively, or in addition, a Near Field Communication (NFC) communication link 135 may be used to provide a short-range communication between the device 110 and the vehicle 100. For establishing the NFC communication link 135, the device 110 may be held in close proximity (e.g. in a distance of less than 10cm) from the communication unit 105 of the vehicle 100.

A control unit 101 of the vehicle 100 may be configured to control at least one vehicle function 103 of the vehicle 100 in dependence of the communication between the device 110 and the vehicle 100. In this context, the digital key 111 of the device 110 may be verified, in particular authenticated. Furthermore, subjected to authentication, one or more vehicle functions 103 may be controlled, notably in dependence of
- the distance between the device 110 and the vehicle 100;
- the location of the device 110 relative to the vehicle 100; and/or
- a control command sent by the device 110 to the vehicle 100 via a communication link 112, 135.

In an example system 150, a BLE communication link 112 may be established between the device 110 and the vehicle 100, once the distance between the device 110 and the vehicle 100 is equal to or less than a first distance threshold. Once the BLE communication link 112 has been established, the device 110 may be authenticated with the vehicle 100 using the digital key 111 of the device 110. Subject to authentication of the device 110, the device 110 may be enabled to send one or more control commands via the communication link 112 for controlling one or more vehicle functions 103.

The system 150 may comprise a vehicle-server 140 which may e.g. be managed by a manufacturer of the vehicle 100. The device 110 and/or a communication unit 106 of the vehicle 100 may be configured to communication with the vehicle-server 140 via a (wireless) communication link 131 (e.g., a 3G, 4G, 5G or higher communication link).

Fig. 1b shows details of an electronic device 110 (i.e., the digital key device). Fig. 1b shows the secure storage area 116, in particular the so-called "secure element", in which the digital key 111 is stored. The secure storage area 116 typically comprises a digital key (DK) applet that is designed to provide one or more functions (e.g., generating a digital signature) with respect to the digital key 111.

The device 110 may comprise an operating system 117 which is configured to interact with the storage area 116, notably with the key applet of the storage area 116, via a (secure) data interface 119. The operating system 117 may execute a software application 118, e.g. a software application 118 which is configured to interact with the vehicle-server 140. The operating system 117 may be configured to transfer data between the software application 118 and the operating system 117 via a data interface 114. Furthermore, the device 110 may comprise a communication module 115, notably an NFC communication module, for establishing an NFC communication link 135 with the vehicle 100 or with a key card 160.

The user 170 of the device 110 with the digital key 111 may enable another user and/or another electronic device to control one or more vehicle functions 103. For this purpose, the digital key device 110 may cause a shared digital key to be provided to another electronic device, wherein the shared digital key typically determines the scope of the one or more vehicle functions 103 that can be controlled by the other electronic device. The shared digital key is derived from the digital key 111. In particular, the shared digital key may be a subordinate key of the digital key 111 (within a given public key infrastructure, PKI).

The digital key device 110 (which may also be referred to as the sharer device) may send a transfer request to the vehicle server 140 and/or to the other device via the communication link 131, in order to initiate the creation of a shared digital key on the other device. The transfer request may be signed with the digital key 111 of the digital key device 110. Furthermore, the transfer request may specify a set of the one or more vehicle functions 103 that can be controlled by the digital key (i.e., the entitlements of the shared digital key).

Hence, the digital key device 110 may provide information (e.g., the entitlements) which is used for creating a shared digital key to the other device (which may be referred to as the receiver device). The receiver device may create the shared digital key (with a secret key and a public key). The public key (PK) of the shared digital key (along with information such as the entitlements) may be sent to the digital key device 110. The digital key device 110 may sign the PK of the shared digital key (along with the information regarding the shared digital key), e.g. using the private key of the digital key 111. This data forms a first part of the attestation of the shared digital key.

The first part of the attestation may be sent to the vehicle server 140. The vehicle server 140 may verify the first part of the attestation (using the PK of the digital key 111) and may optionally create an immobilizer token (which is typically needed for an engine start of the vehicle 100). Furthermore, the vehicle server 140 may sign a data package comprising the first part of the attestation and/or data added by the vehicle server 140 (using the private key of the central digital key of the vehicle server 140), thereby generating the attestation for the shared digital key. This attestation may be sent to and/or compiled by the receiver device (i.e., to the other electronic device). Alternatively, or in addition, the attestation may be sent (by the vehicle server 140) to the vehicle 100.

The attestation can be used by the vehicle 100 to check the authenticity of the shared digital key of the other electronic device. For this purpose, the vehicle 100 uses the digital key 111, notably the public key of the digital key 111, of the digital key device 110, from which the sharing of the shared digital key was initiated. The digital key 111 of the device 110 may have been used to sign one or more properties of the shared digital key (such as the entitlements of the shared digital key). Furthermore, a central digital key, notably the public key (PK) of the central digital key, of the vehicle server 140 may be required, with which the attestation for the shared digital key for the other electronic device 120 has been signed. The central digital key may have been used to sign meta information regarding the shared digital key (such as the receipt of the KTS (key tracking server)).

Typically, the shared digital key (along with other metadata) is comprised within the attestation, such that only the attestation is provided to the vehicle 100 and/or to the other electronic device (within respective messages). From this attestation 122, the shared digital key can be extracted. The integrity of the attestation may be verified using the (public key of) the central digital key of the vehicle server 140 and/or the (public key of the) digital key 111 from which the shared digital key was derived.

It may be desirable to enable the user 170 of the digital key device 110 to share the digital key 111 with a smart and/or key card 160 (referred to herein as key card) which typically only comprises substantially reduced communication and/or processing capability compared with an electronic device, such as a smartphone. In particular, the key card 160 typically does not comprise its own power supply (e.g., battery), such that the key card 160 cannot be operated autonomously. The key card 160 may be configured to receive electrical power for operating the key card 160 via a communication link 135, notably via an NFC communication link. This may be the only power source for operating the key card 160, i.e., the electronic components of the key card 160.

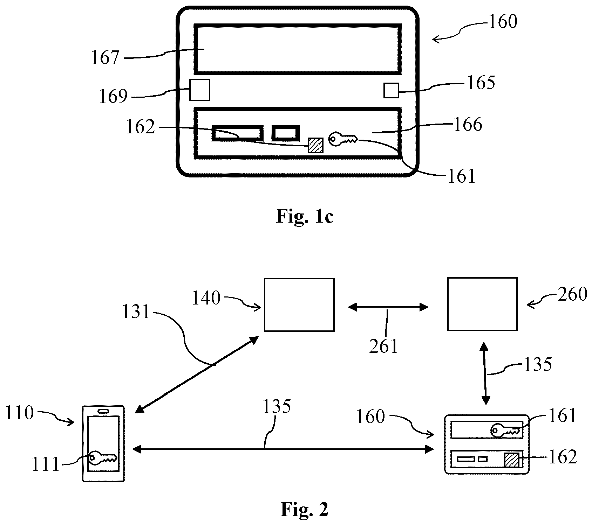

Fig. 1c shows an example key card 160 having a communication module 165, notably an NFC communication module, and a secure storage area 166, notably a secure element, wherein the storage area 166 is configured to store a shared digital key 161 and/or the attestation 162 for the shared digital key 161. Furthermore, the key card 160 may comprise an applet 167 (notably a digital key (DK) applet) which provides a set of commands for interacting with the key card 160, notably with the storage area 166 of the key card 160. The applet 167 may be executed on a processor of the key card 160 (when the key card 160 is provided with electrical energy from an external power supply). In addition, the key card 160 may have a code 169, in particular a machine-readable code such as a QR code, printed on the surface of the key card 160. The code 169 may be indicative of a password which may be used for establishing a secure communication channel with the key card 160.

The digital key device 110, notably the owner and/or sharer device, may interact with a key card 160 via a communication link 135, in particular via an NFC communication link, as illustrated in Fig. 2. Hence, the device 110 may be used as an NFC card reader 180 for the key card 160. The communication link 135 may be used to manage, e.g. to share or create, to terminate and/or to delete, the shared digital key 161 on the key card 160.

The key card 160 is typically provided by a key card provider, wherein the key card provider operates a card server 260. The card server 260 and the key card 160 may interact via a communication link 135, notably via an NFC communication link, e.g. to install software on the key card 160, such as the digital key applet 167, and/or to provide PKI (public key infrastructure) data to the key card 160. The PKI data of the card server 260 is typically independent from the PKI data used by the vehicle server 140 (for the digital key 111). The PKI data on the key card 160 may comprise a key pair for enabling a secure communication with the key card 160. The card server 260 and the vehicle server 140 may be configured to communicate with one another via a (wireless and/or wireline) communication link 261.

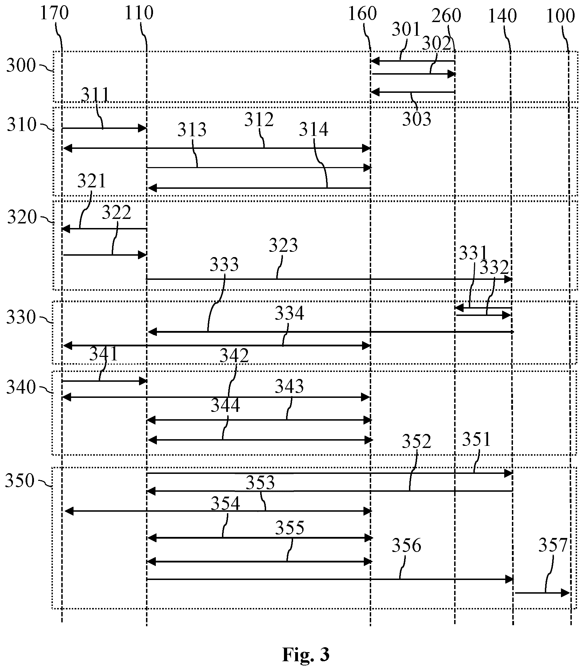

Fig. 3 illustrates an example process for sharing a digital key 111 from a digital key device 110, notably the owner and/or sharer device, to a key card 160. The process involves the digital key device 110, in particular the digital key applet of the device 110, the key card 160, notably the digital key applet 167 of the key card 160, the card server 260, the vehicle server 140 (including a key tracking server (KTS) for tracking one or more shared digital keys 161) and/or the vehicle 100.

In a preparatory phase 300 (which is typically performed by the key card provider), the digital key applet 167 may be provided on the key card 160 (step 301), e.g. via the communication link 135 between the key server 260 and the key card 160. Furthermore, PKI data, notably a so-called instance CA, may be provided by the key server 260 to the key card 160 (step 301). The instance CA may comprise a key pair with a public key PK and a private key SK. Furthermore, a certificate for the instance CA may be provided, wherein the instance CA certificate may be signed by the key server 260 (using a SK of the digital key of the key server 260), in order to certify the validity of the instance CA (steps 302, 303). As a result of this, the key card 160 may comprise a DK applet 167 which enables the key card 160 to perform actions with regards to a shared digital key 161. Furthermore, the key card 160 may comprise an instance CA with an instance CA certificate, which enables the key card 160 to be identified in a secure manner.

In a subsequent phase 310, the digital key device 110 may identify the key card 160 to which the shared digital key 161 is to be provided. For this purpose, the sharing process (for sharing a digital key 111, 161) may be initiated by the user 170 of the digital key device 110 via a user interface of the digital key device 110 (step 311). The user interface may e.g. be provided by the (vehicle-related) software application 118 running on the digital key device 110. The key card 160 may be placed on the communication unit 105 of the digital key device 110 for establishing a (NFC) communication link 135 between the digital key device 110 and the key card 160 (step 312).

The digital key device 110, notably the DK applet of the device 110, may then request provision of the Instance CA of the key card 160 from the key card 160, notably from the DK applet 167 of the key card 160 (step 313). The key card 160 may then provide the Instance CA certificate to the digital key device 110 (step 314). The Instance CA certificate (possibly in conjunction with one or more further certificates from the key chain of the Instance CA) may be used to identify the key card 160 in a secure and unambiguous manner.

In a subsequent phase 320, the user 170 may be requested to authorize the sharing process for sharing the digital key 111, 161 with the key card 160 which is identified by the Instance CA. For this purpose, the digital key device 110 may generate Hardware Token Sharing Data based on the Instance CA certificate of the key card 160 and based on the vehicle identifier of the vehicle 100 (for which the shared digital 161 is to be used), and possibly based on additional information.

The Hardware Token Sharing Data may be provided to the vehicle server 140 within a pre-sharing step, in order to enable the vehicle server to identify the key card 160, to which the digital key 111, 161 is to be shared (step 323).

The user may be asked to authorize the transferal of the Hardware Token Sharing Data to the vehicle server 140 via the user interface of the digital key device 110 (steps 321, 322). Subject to authorization by the user, the Hardware Token Sharing Data may be signed by the DK applet of the device 110 (using the private key (SK) of the digital key 111), and the signed Hardware Token Sharing Data may be provided to the vehicle server 140 (step 323). The vehicle server 140 may verify the validity of the instance CA certificate of the key card 160, which is provided within the signed Hardware Token Sharing Data using the digital key 111, notably the PK of the digital key 111, of the digital key device 110.

Once the vehicle server 140 has been informed about the identity of the key card 160, to which the digital key 111 is to be shared, (using the Instance CA of the key card 160) pairing data may be shared, in order to enable the digital key device 110 and the key card 160 to build up a secure communication channel between the device 110 and the key card 160, e.g. for sharing the digital key 111 (phase 330). An ECC (elliptic-curve cryptography)-based pairing algorithm protocol may be used for this purpose, in particular the SPAKE2+ protocol (i.e., the SPAKE2+ scheme). The SPAKE2+ protocol is e.g. described in chapter 18 of the CCC-TS-101 specification (e.g., release 3). This specification is incorporated herein by reference in its entirety.

The pairing data (notably a password) may be requested by the vehicle server 140 from the card server 260 (step 331) and may subsequently be provided to the vehicle server 140 (step 332). Subsequently, the pairing data (notably the password) may be provided to the device 110 (step 333). Alternatively, or in addition, the password for the pairing protocol may be provided via a code 169 which is visible on the key card 160 (step 334). In general, the password for the pairing protocol may be provided to the user 170 along with the key card 160 (e.g., upon card purchase). The password may be printed on the key card 160 and/or on a paper that is bundled with the key card 160, etc. As a result of this, the device 110 holds the pairing data (notably the password), which may be used to build a secure communication channel with the key card 160.

In a subsequent phase 340, the pairing data may be used to set up a secure communication channel between the device 110 and the key card 160 for sharing the digital key 111. The user 170 may select the digital key 111 which is to be shared (step 341). Furthermore, the user 170 may select the entitlements of the shared digital key 161 (in particular the entitlements with regards to the one or more vehicle functions 103 that can be controlled using the shared digital key 161).

The user 170 may place the key card 160 onto the device 110 in order to set up a (NFC) communication link 135 between the device 110 and the key card 160 (step 342). Subsequently, the pairing algorithm protocol, notably the SPAKE2+ protocol, may be executed (step 343) using the pairing data (notably the password) that has been provided to the device 110 (step 343). The key card 160 may act as "verifier" within the pairing algorithm protocol. As a result of the pairing algorithm protocol a secure communication channel between the device 110 and the key card 160 is established, which may be used to generate a shared digital key 161 on the key card 160 (step 344). This process may be referred to as the endpoint creation process.

During the endpoint creation process, the shared digital key 161 is generated based on the digital key 111. Furthermore, a certificate for the shared digital key 161 is generated (wherein the certificate may be indicative of the Instance CA of the key card 160 (which is typically the issuer of the shared digital key 161)). The certificate (including the shared digital key 161) may be stored in a memory slot of the storage area 166 of the key card 160, thereby providing a (CCC) endpoint on the key card 160.

Furthermore, the attestation 162 for the shared digital key 161 may be generated by the sharer device 110 (within phase 350). The attestation 162 typically includes
- a key identifier of the shared digital key 161;
- the PK of the shared digital key 161;
- information regarding the validity of the shared digital key 161; and/or
- information regarding the entitlements of the shared digital key 161.

The attestation 162 may be signed by the device 110 (using the SK of the digital key 111). The signed attestation 162 may be sent to the vehicle server 140 (step 351) and the vehicle server 140 may verify the authenticity of the attestation 162 using the PK of the digital key 111. Furthermore, the vehicle server 140 may receive and/or verify the certificate and/or the certificate chain of the shared digital key 161. In addition, the vehicle server 140 may sign the verified attestation 162 using the private key (SK) of the central digital key of the vehicle server 140. Furthermore, the vehicle server 140 may pass the attestation 162 (including the shared digital key 161) to the key tracking server (KTS), thereby enabling tracking of the shared digital key 161.

The signed attestation 162 and/or the receipt of the KTS (signed by the vehicle server 140) may be passed back to the device 110 (step 352), possibly along with an (encrypted) immobilizer token (for enabling the shared digital key 161 to start the engine of the vehicle 100).

Subsequently, the signed attestation 162 may be provided to (and stored on) the key card 160. For this purpose, the user 170 may place the key card 160 onto the device 110 to establish a or to reestablish the communication link 135 (step 353). Furthermore, the pairing algorithm protocol, notably the SPAKE2+ protocol (i.e., scheme), may be executed, to set up a secure communication channel between the device 110 and the key card 160 (step 354). Eventually, the attestation 162 may be written to the key card 160 (step 354). Furthermore, the vehicle server 140 may be informed that the key sharing process is terminated (step 356). In addition, the attestation 162 (including the (PK of the) shared digital key 161) may be sent from the vehicle server 140 to the vehicle 100, thereby enabling the use of the shared digital key 161 for controlling one or more vehicle functions 103 of the vehicle 100.

Hence, for the protection of one or more sensitive commands with regards to the key card 160 (such as the create, terminate and/or delete endpoint command), a PAKE scheme, notably the SPAKE2+ protocol, may be used. When providing a digital key 161 to a key card 160, the device 110 or NFC terminal 180 (in conjunction with the vehicle server 140) takes the active part (server) and the key card acts 160 as the passive part (client).

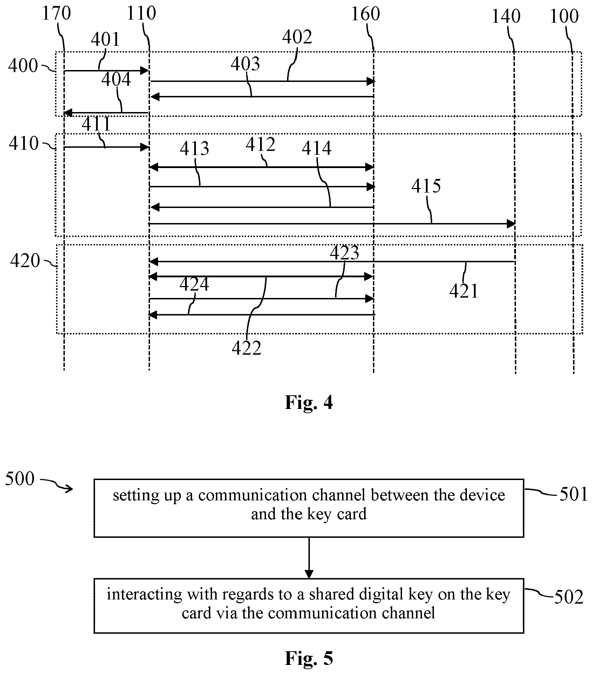

It may be required to terminate and/or to delete a shared digital key 161 on or from a key card 160. In this context, it should be ensured that the termination and/or the deletion of the shared digital key 161 is tracked by the vehicle server 140 and/or by the key tracking server (KTS). Fig. 4 shows an example process for terminating and/or for deleting a shared digital key 161.

The user 170 may select the shared digital key 161 and/or the key card 160 of the shared digital key 161 (for terminating and/or for deleting the shared digital key 161). For this purpose, the device 110 may interact with the key card 160 to identify the one or more digital keys 161 which are stored on the key card 160 (steps 401, 402, 403 of phase 400). This information may be provided to the device 110 (step 404), and the user 170 may select one of the digital keys 161. Furthermore, the user 170 may request deletion of the selected digital key 161 (step 411 of phase 410). Subsequent to this, the pairing algorithm protocol (notably the SPAKE2+ protocol) may be used to set up a secure communication channel between the device 110 and the key card 160 (step 412). Furthermore, the key card 160 may be instructed to terminate the shared digital key 161, e.g. using the terminate endpoint command which is sent to the key card 160 via the secure communication channel (step 413).

In reaction to receiving the instruction to terminate the shared digital key 161, the key card 160 may terminate endpoint (such that the shared digital key 161 is not usable anymore) and may generate a termination attestation, which may be sent to the device 110 via the secure communication channel, e.g. using the terminate endpoint response (step 414). The termination attestation may comprise the identifier of the shared digital key 161 and information that is indicative of the termination of the shared digital key 161. The device 110 may provide the termination attestation to the vehicle server 140, e.g. using the manage Key message (step 415).

The vehicle server 140 may instruct the key tracking server to delete the shared digital key 161 (from the key chain). Furthermore, the vehicle server 140 may inform the device 110 that the shared digital key 161 has been deleted from the key tracking server (step 421). This feedback of the vehicle server 140 to the device 110 may or may not comprise a deletion confirmation by the KTS. If a deletion confirmation is to be provided to the key card 160, the deletion confirmation may be signed by the vehicle server 140 using the private key (SK) of the central digital key of the vehicle server 140. The device 110 and/or the key card 160 may then verify (authenticity of) the deletion confirmation using the public key (PK) of the central key.

It should be noted that the KTS may maintain a trace of the (deleted) shared digital key 161 within the database of the KTS. Hence, the deletion of the shared digital key 161 may comprise that the shared digital key 161 is marked as being deleted within the database of the KTS. As a result of this, the KTS provides a documentation with regards to the state of the shared digital key 161. In particular, the database of the KTS may indicate that the shared digital key 161 has been deleted from the key card 160.

Subject to being informed that the shared digital key 161 has been marked as being deleted within (the database of) the KTS, the device 110 may instruct or request deletion of the shared digital key 161 from the key card 160 (step 423). For this purpose, a command, notably the Delete Endpoint Command, may be sent to the key card 160 via the secure communication channel. The key card 160 may then delete the shared digital key 161 (and the certificate of the shared digital key 161) from the storage area 166 of the key card 160. In this context, the deletion confirmation may be verified by the key card 160 using the public key of the central digital key of the vehicle server 140. Deletion of the shared digital key 161, i.e. of the endpoint for the shared digital key 161, may be performed (possibly only) subject to a successful verification of the deletion confirmation.

Furthermore, the key card 160 may inform the device 110 that the shared digital key 161 has been deleted (step 424). As a result of this, the key card 160, notably the memory slot of the storage area 166 of the key card 160, has been cleared up, such that the key card 160 may be used for other purposes (e.g. for storing a different shared digital key).

When a shared digital key 161 is deleted from a key card 160, the key card 160 relies on the device 110 (which acts as an NFC terminal 180) to execute the required commands for deleting the shared digital key 161. Deleting the shared digital key 161 from the key card 160 renders the shared digital key 161 useless. However, the vehicle server 140 may not be aware of the deletion of the shared digital key 161, which is typically not desirable. The process shown in Fig. 4 ensures that the vehicle server 140, notably the key tracking server, is informed about the deletion of the shared digital key 161.

This is achieved by involving the vehicle server 140 into the deletion process. The key card 160 can only free up the terminated endpoint (i.e. the terminated shared digital key 161), subject to a confirmation by the vehicle server 140. Typically, the memory slot for an endpoint within the storage area 166 of the key card 160 can only be reused subsequent to deletion of the shared digital key 161. The deletion of the endpoint can only be performed subject to approval by the vehicle server 140.

As outlined in the context of Fig. 3, the public key of the central digital key of the vehicle server 140 may be provided to the device 110 and to the key card 160 during the sharing process for sharing the digital key 111 of the device 110. The central digital key which is used for indicating the need for a (signed) deletion confirmation may be different from the central digital key which is used for signing the attestation 162 of the shared digital key 161. If the public key of the central digital key of the vehicle server 140 is not provided to the key card 160, the key card 160 does not require a (signed) deletion confirmation from the vehicle server 140 for deleting the shared digital key 161. On the other hand, the public key of the central digital key of the vehicle server 140 may be provided to the key card 160 within the creation process of the endpoint (for the shared digital key 161) at the key card 160 (e.g. as part of the attestation 162 of the shared digital key 161). The public key (PK) of the central digital key may then be used by the key card 160 to verify authenticity of the deletion confirmation.

During the deletion process for deleting the shared digital key 161, the endpoint on the key card 160 may be terminated (using the Terminate Endpoint Command) which renders the endpoint useless (but does not free up the memory slot from the storage area 166 of the key card 160), and which leads to the provision of the endpoint termination attestation. The endpoint termination attestation may comprise a tag which indicates whether or not a deletion confirmation is required for deleting the endpoint from the key card 160.

In case the endpoint termination attestation states that a deletion confirmation (e.g., from the KTS or from the vehicle server 140) is required, the device 110 provides the deletion confirmation to the key card 110 and the key card 160 verifies the deletion confirmation using the public key of the central digital key of the vehicle server 140. In case the verification fails or no deletion confirmation is provided, the key card 160 denies the deletion request and the endpoint memory slot within the storage area 166 of the key card 160 is not deleted and/or freed up. Otherwise, the key card 160 deletes the endpoint data and frees up the endpoint memory slot within the storage area 166 of the key card 160. In case no deletion confirmation required, the key card 160 directly deletes the endpoint data and frees up the endpoint memory slot within the storage area 166 of the key card 160.

In Fig. 4 the digital key 111 of the device 100 is managed by the vehicle server 140, and as a result of this, the manageKey request (with the endpoint termination attestation) is sent to the vehicle server 140 (step 415). In case a global CCC management key is used, the manageKey request may be sent to a CCC owned server, which may then inform the vehicle server 140.

Hence, a scheme for deletion of a digital key endpoint on a key card 160 with involvement of the vehicle server 140 is described, to ensure key tracking during the digital key termination procedure.

It may occur that a key card 160 having a digital key 161 stored thereon is reused in a different environment, e.g. with a different vehicle manufacturer (and a different PKI). By way of example, the digital key 161 which is stored in an endpoint memory slot of the storage area 166 of the key card 160 may be associated with a first manufacturer, wherein the key card 160 is to be used with the vehicle 100 of a second manufacturer. As outlined in the context of Fig. 4, the deletion of the stored digital key 161 for freeing up the endpoint memory slot within the storage area 166 of the key card 160 may involve an interaction with the vehicle server 140 of the first manufacturer (which is associated with the digital key 161 that is stored on the key card 160).

The endpoint for the stored digital key 161 typically comprises a digital key certificate which comprises information regarding the stored digital key 161 (e.g. the digital key identifier) and/or regarding the vehicle 100 (e.g. the vehicle identifier) for which the stored digital key 161 may be used.

The digital key certificate, notably an extension of the digital key certificate, of the stored digital key 161 may further comprise routing information that can be used to identify and to communicate with the vehicle server 140 of the first manufacturer. The routing information may comprise,
- an identifier of the first manufacturer (e.g. a tag referred to as "vehicle_OEM_id");
- an identifier for the data center and/or region within which the vehicle server 140 of the first manufacturer is located (e.g. a tag referred to as "datacenter and/or region"); and/or
- an identifier for the brand of the vehicle 100 (e.g. a tag referred to as "vehicle_brand_id).

As outlined in the context of Fig. 4, the certificate of the stored digital key 162 which is stored on the key card 160 may be provided to a device 110 (i.e. a card reader 180) during the deletion process for deleting the digital key 162. The device 110 may extract the routing information from the certificate in order to identify the server 140 which is to be contacted for the deletion of the digital key 162. Alternatively, or in addition, the device 110 may request the key card 160 to provide the routing information from the certificate of the stored digital key 162 (e.g., using a "view command" which is sent from the device 110 to the key card 160).

Hence, the digital key certificate, notably the digital key extension, may comprise one or more optional properties and/or tags. A device 110 can read out the digital key endpoint certificate (e.g. using the view command) to determine the one or more properties and/or tags (notably the Vehicle OEM Identifier, the Vehicle Brand Identifier and/or the Datacenter/Region). By doing this, the correct vehicle server 140 may be identified and contacted, when managing the digital key endpoint which is stored on the digital card 160.

Fig. 5 shows a flow chart of an example (possibly computer-implemented) method 500 for managing a shared digital key 161 on a key card 160, wherein the shared digital key 161 may be used and/or is enabled for controlling one or more vehicle functions 103 of a vehicle 100. The shared digital key 161 is typically derived from a digital key 111 of a sharer device 110. In particular, the shared digital key 161 may be a subordinate key of the digital key 111 within a key chain. The method 500 may be executed by the key card 160 or by the device 110, notably by the sharer device 110.

The method 500 comprises setting up 501 a communication channel, notably a secure communication channel, between the device 110 and the key card 160. The communication channel is typically provided using a (NFC) communication link 135 between the device 110 and the key card 160. For this purpose, the key card 160 may be placed on the device 110 (such that the key card 160 is provided with electrical energy for operating the key card 160, notably for operating the DK applet 167 of the key card 160, by the device 110). The communication channel may be set up using a password authenticated key exchange (PAKE) algorithm, thereby enabling the efficient provision of a secure communication channel.

Furthermore, the method 500 comprises interacting 502 with regards to the shared digital key 161 of the key card 160 via the (secure) communication channel. Interacting 502 may comprise creating, terminating and/or deleting the digital key endpoint for the shared digital key 161.

By making use of a secure communication channel, a particularly secure interaction between the device 110 and the key card 160 may be provided in an efficient manner.

Hence, in the present document, a device 110, notably a sharer device 110, for managing a digital key 111 is described, wherein the digital key 111 is enabled for controlling one or more vehicle functions 103 of a vehicle 100. The device 110 may comprise the digital key 111. In particular, the digital key 111 may be stored within a (secure) storage area 116 (notably within a secure element) of the device 110. The device 110 may be configured to set up a (secure) communication channel with a key card 160. The communication channel with the key card 160 may be set up using a password authenticated key exchange, PAKE, scheme, in particular using the SPAKE2+ scheme. As already indicated above, the SPAKE2+ scheme is described e.g. in chapter 18 of the CCC-TS-101 specification (release 3), which is incorporated herein by reference in its entirety.

The device 111 may be configured to receive pairing data for setting up the communication channel from the vehicle server 140 which is associated with the digital key 111 of the device 110. Furthermore, the device 111 may be configured to derive a password from the pairing data, and to set up the communication channel using the password. Alternatively, or in addition, the device 110 may be configured to derive the password from an image of a code 169, e.g. a QR code, that is represented on the key card 160. The image may e.g. be captured by a camera of the device 110.

The device 110 may be configured to set up the communication channel with the key card 160 via a near field communication, NFC, communication link 135 between the device 110 and the key card 160 (e.g., subject to placing the key card 160 near to the device 110). Placing the device 110 and the key card 160 in close proximity to one another may cause the key card 160 to be provided with electrical energy from the device 110, e.g. using inductive energy transfer from the device 110 to the key card 160. The key card 160 may start operation subject to receiving electrical energy from the device 110, in order to build up the NFC communication link 135 and/or in order to build up the secure communication channel.

The device 110 is further configured to interact with the key card 160 regarding the shared digital key 161 of the key card 160 via the communication channel, wherein the shared digital key 161 is typically derived from the digital key 111 of the device 110. The device 110 may be configured to interact with the key card 160 regarding the shared digital key 161 e.g. by
- sending a create endpoint command to the key card 160 via the communication channel for creating the shared digital key 161 (and the associated endpoint);
- sending a terminate endpoint command to the key card 160 via the communication channel for terminating the validity and/or usability of the shared digital key 161 (and the associated endpoint); and/or
- sending a delete endpoint command to the key card 160 via the communication channel for deleting the memory slot for the shared digital key 161 (and for the associated endpoint) from the storage area 166 of the key card 160.

The device 110 may be configured to receive an attestation 162 (for the shared digital key 161) via the communication channel. The attestation 162 may be received subject to creation of the shared digital key 161 on the key card 160. The attestation 162 typically comprises an identifier of the shared digital key 161 (as well as further information). Furthermore, the device 110 may be configured to send the attestation 162 to a key tracking server for key tracking and/or to the vehicle server 140 (which is in communication with the key tracking server). Furthermore, the attestation 162 may be provided to the vehicle 100, thereby enabling the control of the one or more vehicle functions 103 using the shared digital key 161.

As already indicated above, the digital key 111 and/or the shared digital key 161 are preferably Car Connectivity Consortium, CCC, digital keys, according to the CCC Digital Key Standard, Release 3 or higher.

According to a further aspect, a key card 160 is described, which is configured to control one or more vehicle functions 103 of a vehicle 100 using a shared digital key 161, wherein the shared digital key 161 is typically derived from the digital key 111 of a device 110, notably a sharer device 110. The digital key 111 may be managed by the device 110 and/or stored on the device 110. The key card 160 may be configured to set up a (secure) communication channel with the device 110, e.g. using a PAKE, notably a SPAKE2+, scheme. Furthermore, the key card 160 may be configured to interact with the device 110 regarding the shared digital key 161 of the key card 160, which is stored on the key card 160, via the (secure) communication channel.

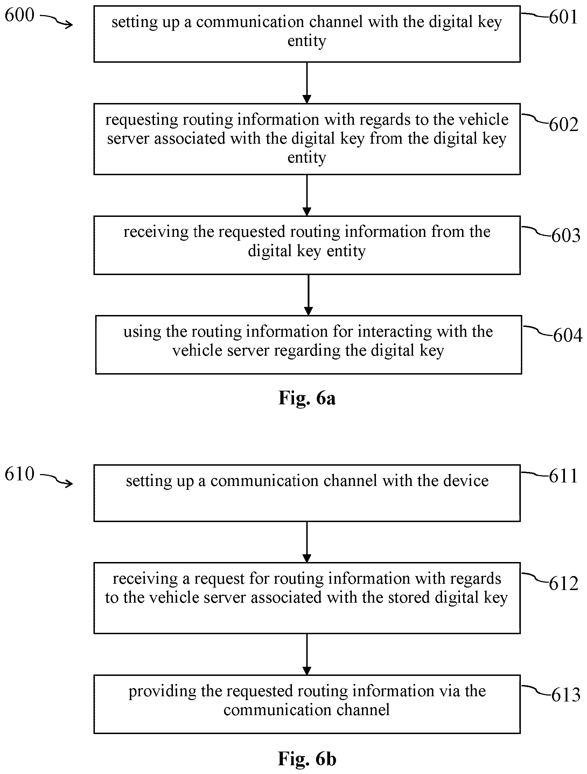

Fig. 6a shows a flow chart of a (possibly computer implemented) method 600 for interacting with a digital key 161 which is enabled for controlling one or more vehicle functions 103 of a vehicle 100. The digital key 161 may be stored on a digital key entity 160 (notably a key card 160). The method 600 may be executed by a (electronic) device 110. The digital key 161 which is stored on the digital key entity 160 may be unknown to the device 110.

The method 600 comprises setting up 601 a (secure) communication channel with the digital key entity 160 (e.g. using the PAKE, notably the SPAKE2+, scheme). The communication channel may be provided over a (NFC) communication link 135 between the device 110 and the digital key entity 160.

Furthermore, the method 600 comprises requesting 602 routing information regarding the vehicle server 140 that is associated with the digital key 161 which is stored on the digital key entity 160 via the communication channel. The routing information may be indicative of the identifier and/or the location (e.g., the region) of the vehicle server 140 that the digital key 161 is associated with. Alternatively, or in addition, the routing information may indicate the brand of the vehicle 100 that the digital key 161 is associated with.

The method 600 further comprises receiving 603 the requested routing information via the communication channel. In addition, the method 600 may comprise using 604 the routing information for interacting with the vehicle server 140 regarding the digital key 161. By way of example, the interaction with the vehicle server 140 may be directed at the deletion of the digital key 161 from the digital key entity 160, e.g. for enabling the digital key entity 160 to be used with another digital key. The deletion may be performed using the process outlined in Fig. 4.

The provision of routing information enables a flexible and efficient handling of a digital key 161 which is stored on a digital key entity 160 such as a (passive) key card.

Fig. 6b shows a flow chart of a (possibly computer-implemented) method 610 for interacting with a digital key 161 which is enabled for controlling one or more vehicle functions 103 of a vehicle 100, wherein the digital key 161 is stored on a digital key entity 160. The method 610 may be executed by the digital key entity 160 (e.g. by a key card).

The method 610 comprises setting up 611 a (secure) communication channel with a device 110 (wherein the device 110 may be used for handling a deletion process for deleting the digital key 161 which is stored on the digital key entity 160). The communication channel may be set up using a PAKE, notably the PAKE2+, scheme (as outlined in the context of Fig. 3 and/or method 500).

Furthermore, the method 610 comprises receiving 612 a request for routing information regarding the vehicle server 140 that is associated with the digital key 161 via the communication channel. Furthermore, the method 610 comprises sending 613 the requested routing information via the communication channel.

Hence, a device 110 for interacting with a digital key 161 is described, wherein the digital key 161 may be used and/or may be enabled for controlling one or more vehicle functions 103 of a vehicle 100, and wherein the digital key 161 may be stored on a digital key entity 160 (notably a key card).

The device 110 may be configured to set up a (secure) communication channel with the digital key entity 160 (e.g. using method 500). Furthermore, the device 110 may request routing information regarding a vehicle server 140 that is associated with the digital key 161 on the digital key entity 160 via the communication channel. For this purpose, the device 110 may send a view command to the digital key entity 160 via the communication channel to request the routing information. The routing information may be indicative of the identifier of the vehicle server 140 (which is associated with the digital key 161), the location (e.g. the region) of the vehicle server 140 (which is associated with the digital key 161), and/or the brand of the vehicle 100.

The device 110 is further configured to receive the requested routing information via the communication channel. The routing information may then be used for interacting with the vehicle server 140 regarding the digital key 161 (e.g., for deleting the digital key 161, wherein the deletion process may be performed according to method 700, 710).

Furthermore, a digital key entity 160, in particular a key card, is described, which is configured to store a digital key 161, wherein the digital key 161 is enabled for controlling one or more vehicle functions 103 of a vehicle 100. The digital key entity 160 may be configured to set up a (secure) communication channel with a device 110 (e.g. using a PAKE, in particular the SPAKE2+, scheme). Furthermore, the digital key entity 160 may be configured to receive a request for routing information regarding the vehicle server 140 that is associated with the digital key 161 via the communication channel, and to send the requested routing information via the communication channel.

The routing information may be stored within the digital key certificate of the digital key 161 (notably within an extension of the digital key certificate). The digital key entity 160 may be configured to extract the routing information from the digital key certificate.

Furthermore, a digital key certificate for a digital key 111, 161 is described, wherein the digital key 111, 161 may be used and/or may be enabled for controlling one or more vehicle functions 103 of a vehicle 100. The digital key certificate comprises routing information regarding the vehicle server 140 that is associated with the digital key 111, 161. The routing information may be indicative of the identifier of the vehicle server 140, the location (e.g. the region) of the vehicle server 140, and/or the brand of the vehicle 100.

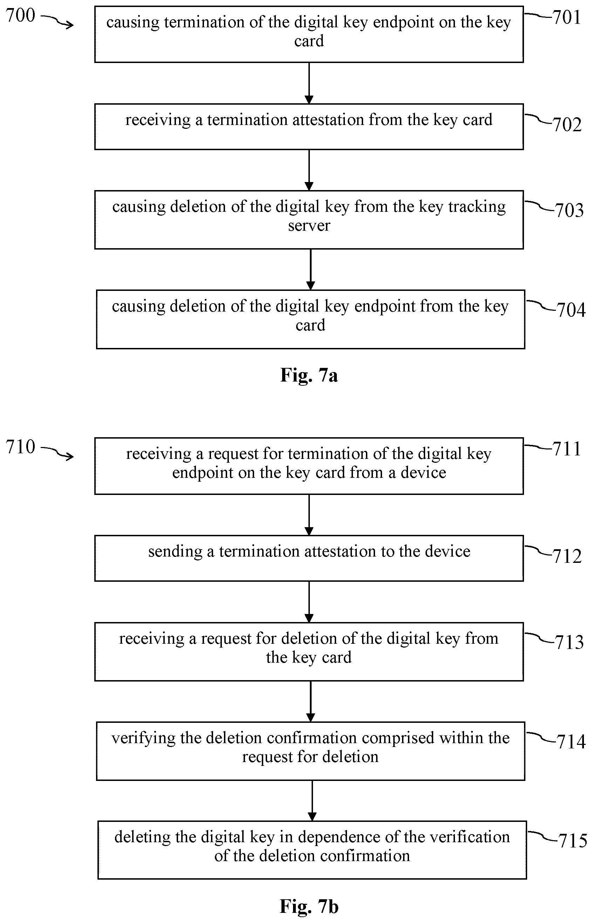

Fig. 7a shows a flow chart of a (possibly computer-implemented) method 700 for interacting with a shared digital key 161, which may be used and/or which may be enabled for controlling one or more vehicle functions 103 of a vehicle 100. The shared digital key 161 may be stored on a key card 160. The method 700 may be executed by a (sharer) device 110.

The method 700 comprises causing 701 termination of the digital key endpoint for the shared digital key 161 on the key card 160 (e.g., by sending a termination request to the key card 160 via a (secure) communication channel, wherein the communication channel may have been set up using method 500). Furthermore, the method 700 comprises receiving 702 a termination attestation from the key card 160, wherein the termination attestation indicates that the digital key endpoint has been terminated (by the key card 160). The termination attestation may be received via the (secure) communication channel.

The method 700 further comprises causing 703 deletion of the shared digital key 161 from the key tracking server for tracking keys (e.g., via the vehicle server 140), and subject and/or subsequent to causing 703 deletion of the shared digital key 161 on the key tracking server, causing 704 deletion of the digital key endpoint from a memory slot of the storage area 166 of the key card 160.

The method 700 allows for a reliable deletion of the digital key endpoint from a key card 160.

Fig. 7b shows a flow chart of a (possibly computer-implemented) method 710 for deleting a shared digital key 161 (from a key card 160), wherein the shared digital key 161 may be used and/or may be enabled for controlling one or more vehicle functions 103 of a vehicle 100. The method 710 may be executed by the key card 160.

The method 710 comprises receiving 711 a request for terminating the digital key endpoint for the shared digital key 161 on the key card 160. Furthermore, the method 710 comprises (subject and/or subsequent to terminating the digital key endpoint) sending 712 a termination attestation which indicates that the digital key endpoint has been terminated.

The method 710 may further comprise receiving 713 a request for deletion of the digital key endpoint from a memory slot of the storage area 166 of the key card 160. The request may comprise a deletion confirmation which is indicative of the deletion of the shared digital key 161 from the key tracking server. The deletion confirmation may have been signed with the private key of the central digital key of the vehicle server 140.

Furthermore, the method 710 may comprise verifying 714 the deletion confirmation (e.g., using the public key of the central digital key of the vehicle server 140). In addition, the method 710 may comprise deleting 715 the digital key endpoint in dependence of the verification of the deletion confirmation.

The method 710 allows for a particularly reliable deletion of the digital key endpoint from a key card 160.

Hence, a (sharer) device 110 for interacting with a shared digital key 161 is described, wherein the shared digital key 161 may be used and/or may be enabled for controlling one or more vehicle functions 103 of a vehicle 100, and/or wherein the shared digital key 161 may be stored on a key card 160.

The device 110 may be configured to cause termination of the digital key endpoint for the shared digital key 161 on the key card 160. For this purpose, the device 110 may set up a (secure) communication channel between the device 110 and the key card 160 (e.g., using a PAKE, in particular a SPAKE2+, scheme, e.g. using method 500). Furthermore, the device 110 may be configured to send a (terminate endpoint) command via the communication channel to the key card 160 to cause termination of the digital key endpoint.

Furthermore, the device 110 may be configured to receive a termination attestation from the key card 160, wherein the termination attestation indicates that the digital key endpoint has been terminated. The termination attestation may indicate (e.g. as a tag within the termination attestation) whether or not a (signed) deletion confirmation is to be provided to the key card 160 wherein requesting deletion of the digital key endpoint.

In addition, the device 110 may be configured to cause deletion of the shared digital key 161 from the key tracking server for tracking keys (subject to receiving the termination attestation). For this purpose, a command may be sent to the vehicle server 140 (which is in communication with the key tracking server).

Subject to causing deletion of the shared digital key 161 on the key tracking server, the device 110 may cause deletion of the digital key endpoint from a memory slot of the (secure) storage area 166 of the key card 160. For this purpose, the device 110 may send a (delete endpoint) command via the communication channel to the key card 160 to cause deletion of the digital key endpoint.

The shared digital key 161 typically exhibits an authentication functionality for authenticating the key card 160 at the vehicle 100 (in order to enable the key card 160 to control one or more vehicle functions 103). Furthermore, the digital key endpoint for the shared digital key 161 may block a particular memory slot of the storage area 166 of the key card 160 (such that the memory slot cannot be used for other purposes, e.g. for another digital key).

Termination of the digital key endpoint for the shared digital key 161 may revoke the authentication functionality of the shared digital key 161, without freeing up the memory slot of the storage area 166 of the key card 160. Deletion of the digital key endpoint for the shared digital key 161 may free up the memory slot of the storage area 166 of the key card 160, such that the memory slot is usable for storing the digital key endpoint for another digital key.

The device 110 may be configured to receive a (signed) deletion confirmation from the key tracking server, which indicates that the shared digital key 161 has been deleted from the key tracking server (i.e., has been marked as being deleted). Deletion of the digital key endpoint from the memory slot of the storage area 166 of the key card 160 (notably sending the delete endpoint command) may be performed subject and/or subsequent to receiving the (signed) deletion confirmation. By doing this, a particularly reliable deletion of the digital key endpoint from the key card 160 may be achieved.

The device 110 may be configured to send the (signed) deletion confirmation to the key card 160, in particular along with the command for causing deletion of the digital key endpoint (i.e. along with the delete endpoint command). In particular, the device 110 may be configured to determine, based on the termination attestation (notably based on a tag within the termination attestation), whether or not the deletion confirmation is required for deleting the digital key endpoint. The deletion confirmation may be sent to the key card 160, (only) if it is determined that the deletion confirmation is required for deleting the digital key endpoint. By providing the deletion confirmation, the key card 160 is enabled to verify the authenticity of the deletion confirmation, thereby further increasing the reliability of the deletion process.

The device 110 may be configured to send the public key of the central digital key (e.g., of the key tracking server or of the vehicle server 140 which is in communication with the key tracking server to the key card 160, or a specific card management key that is used for managing the shared digital key 161). This may be performed prior to causing termination of the digital key endpoint for the shared digital key 161 on the key card 160. In particular, this may be performed when creating the digital key endpoint for the shared digital key 161 on the key card 160. By doing this, the key card 160 is enabled to verify the authenticity of the deletion confirmation, thereby further increasing the reliability of the deletion process.

Furthermore, a key card 160 configured to store a shared digital key 161 is described, wherein the shared digital key 161 may be used and/or may be enabled for controlling one or more vehicle functions 103 of a vehicle 100.

The key card 160 may be configured to receive a request for terminating the digital key endpoint for the shared digital key 161 on the key card 160. Furthermore, the key card 160 may be configured to send a termination attestation which indicates that the digital key endpoint has been terminated (subject and/or subsequent to terminating the digital key endpoint). The termination attestation may indicate where or not a (signed) deletion confirmation (from the vehicle server 140 and/or from the KTS) is requested for deleting the digital key endpoint from the key card 160.

The key card 160 may be further configured to receive a request for deletion of the digital key endpoint from a memory slot of the storage area 166 of the key card 160, wherein the request may comprise a (signed) deletion confirmation which is indicative of the deletion of the shared digital key 161 from the key tracking server (KTS).

The key card 160 may be configured to verify the (signed) deletion confirmation, e.g., using the public key of the central digital key of the key tracking server or of the vehicle server 140 which is in communication with the key tracking server. The public key of the central digital key may have been received (at the key card 160) prior to receiving the request for termination of the digital key endpoint for the shared digital key 161, in particular when creating the digital key endpoint for the shared digital key 161 on the key card 160.

Furthermore, the key card 160 may be configured to delete the digital key endpoint in dependence of the verification of the deletion confirmation. In particular, the key card 160 may be configured to delete the digital key endpoint, if it is determined that the deletion confirmation has been issued by the key tracking server or by the vehicle server 140. Alternatively, or in addition, the key card 160 may be configured to refrain from deleting the digital key endpoint, if it cannot be determined that the deletion confirmation has been issued by the key tracking server or by the vehicle server 140. By doing this, a particularly reliable deletion of the digital key endpoint from the key card 160 may be achieved.

As outlined above, the key card 160 may be configured to indicate within the termination attestation whether or not a (signed) deletion confirmation is required for deleting the digital key endpoint. Furthermore, the key card 160 may be configured to delete the digital key endpoint in dependence of the verification of the deletion confirmation, (only) if it has been indicated within the termination attestation that the deletion confirmation is required for deleting the digital key endpoint. Otherwise, the deletion of the digital key endpoint point may be performed without the need for a deletion confirmation.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A device (110) for interacting with a shared digital key (161) which is enabled for controlling one or more vehicle functions (103) of a vehicle (100), wherein the shared digital key (161) is stored on a key card (160); wherein the device (110) is configured to
- cause termination of a digital key endpoint for the shared digital key (161) on the key card (160);
- receive a termination attestation from the key card (160), wherein the termination attestation indicates that the digital key endpoint has been terminated;
- cause deletion of the shared digital key (161) from a key tracking server for tracking keys; and
- subject to causing deletion of the shared digital key (161) on the key tracking server, cause deletion of the digital key endpoint from a memory slot of a storage area (166) of the key card (160).

2. The device (110) of claim 1, wherein the device (110) is configured to
- set up a communication channel between the device (110) and the key card (160); and
- send a command via the communication channel to the key card (160) to cause termination and/or deletion of the digital key endpoint.

3. The device (110) of any previous claim, wherein the device (110) is configured to
- receive a deletion confirmation from the key tracking server, which indicates that the shared digital key (161) has been deleted from the key tracking server; and
- cause deletion of the digital key endpoint from the memory slot of the storage area (166) of the key card (160) subject to receiving the deletion confirmation.

4. The device (110) of claim 3, wherein the device (110) is configured to send the deletion confirmation to the key card (160), in particular along with a command for causing deletion of the digital key endpoint.

5. The device (110) of claim 4, wherein the device (110) is configured to
- determine, based on the termination attestation, whether or not the deletion confirmation is required for deleting the digital key endpoint; and
- send the deletion confirmation to the key card (160), if it is determined that the deletion confirmation is required for deleting the digital key endpoint.

6. The device (110) of any previous claim, wherein the device (110) is configured to send a public key of a central digital key of the key tracking server or of a vehicle server (140) which is in communication with the key tracking server to the key card (160) prior to causing termination of the digital key endpoint for the shared digital key (161) on the key card (160), in particular when creating the digital key endpoint for the shared digital key (161).

7. The device (110) of any previous claim, wherein
- the shared digital key (161) exhibits an authentication functionality for authenticating the key card (160) at the vehicle (100);
- the digital key endpoint for the shared digital key (161) blocks the memory slot of the storage area (166) of the key card (160);
- termination of the digital key endpoint for the shared digital key (161) revokes the authentication functionality of the shared digital key (161), without freeing up the memory slot of the storage area (166) of the key card (160); and
- deletion of the digital key endpoint for the shared digital key (161) frees up the memory slot of the storage area (166) of the key card (160), such that the memory slot is usable for storing a digital key endpoint for another digital key.

8. The device (110) of any previous claim, wherein the shared digital key (161) is a Car Connectivity Consortium, CCC, digital key, according to the CCC Digital Key Standard, Release 3 or higher.

9. A key card (160) configured to store a shared digital key (161) which is enabled for controlling one or more vehicle functions (103) of a vehicle (100); wherein the key card (160) is configured to
- receive a request for terminating a digital key endpoint for the shared digital key (161) on the key card (160);
- send a termination attestation which indicates that the digital key endpoint has been terminated;
- receive a request for deletion of the digital key endpoint from a memory slot of a storage area (166) of the key card (160); wherein the request comprises a deletion confirmation indicative of the deletion of the shared digital key (161) from a key tracking server;
- verify the deletion confirmation; and
- delete the digital key endpoint in dependence of the verification of the deletion confirmation.

10. The key card (160) of claim 9, wherein the key card (160) is configured to
- receive a public key of a central digital key of the key tracking server or of a vehicle server (140) which is in communication with the key tracking server prior to receiving the request for termination of the digital key endpoint for the shared digital key (161), in particular when creating the digital key endpoint for the shared digital key (161); and
- verify the deletion confirmation based on the public key of the central digital key.

11. The key card (160) of any of claims 9 to 10, wherein the key card (160) is configured to
- delete the digital key endpoint, if it is determined that the deletion confirmation has been issued by the key tracking server or by a vehicle server (140) which is in communication with the key tracking server; and/or
- refrain from deleting the digital key endpoint, if it cannot be determined that the deletion confirmation has been issued by the key tracking server or by the vehicle server (140).

12. The key card (160) of any of claims 9 to 11, wherein the key card (161) is configured to
- indicate within the termination attestation whether or not a deletion confirmation is required for deleting the digital key endpoint; and
- delete the digital key endpoint in dependence of the verification of the deletion confirmation, if it has been indicated within the termination attestation that the deletion confirmation is required for deleting the digital key endpoint.

13. A method (700) for interacting with a shared digital key (161) which is enabled for controlling one or more vehicle functions (103) of a vehicle (100), wherein the shared digital key (161) is stored on a key card (160); wherein the method (700) comprises
- causing (701) termination of a digital key endpoint for the shared digital key (161) on the key card (160);
- receiving (702) a termination attestation from the key card (160), wherein the termination attestation indicates that the digital key endpoint has been terminated;
- causing (703) deletion of the shared digital key (161) from a key tracking server for tracking keys; and
- subject to causing (703) deletion of the shared digital key (161) on the key tracking server, causing (704) deletion of the digital key endpoint from a memory slot of a storage area (166) of the key card (160).

14. A method (710) for deleting a shared digital key (161) which is enabled for controlling one or more vehicle functions (103) of a vehicle (100); wherein the method (710) comprises
- receiving (711) a request for terminating a digital key endpoint for the shared digital key (161) on the key card (160);
- sending (712) a termination attestation which indicates that the digital key endpoint has been terminated;
- receiving (713) a request for deletion of the digital key endpoint from a memory slot of a storage area (166) of the key card (160); wherein the request comprises a deletion confirmation indicative of the deletion of the shared digital key (161) from a key tracking server;
- verifying (714) the deletion confirmation; and
- deleting (715) the digital key endpoint in dependence of the verification of the deletion confirmation.
